## Europäisches Patentamt
## European Patent Office
## Office européen des brevets

(19)

(11) Veröffentlichungsnummer: **0 305 762**
**B1**

(12) EUROPÄISCHE PATENTSCHRIFT

(45) Veröffentlichungstag der Patentschrift: **09.01.91**

(51) Int. Cl.⁵: **F 16 K 31/04, F 16 H 25/20**

(21) Anmeldenummer: **88112736.9**

(22) Anmeldetag: **04.08.88**

(54) **Elektromotorischer Stellantrieb mit zeitabhängiger Endlagen- Abschaltung zum Einsatz in Steuer- oder Regeleinrichtungen für strömende Medien.**

(30) Priorität: **17.08.87 DE 3727403**

(43) Veröffentlichungstag der Anmeldung:
**08.03.89 Patentblatt 89/10**

(45) Bekanntmachung des Hinweises auf die
Patenterteilung:
**09.01.91 Patentblatt 91/02**

(84) Benannte Vertragsstaaten:
**AT DE FR GB IT NL**

(56) Entgegenhaltungen:
**DE-A-3 615 285**
**DE-B-1 185 031**
**FR-A-2 538 497**
**GB-A- 878 816**
**US-A-2 351 211**
**US-A-3 079 750**
**US-A-3 150 536**
**US-A-3 994 179**

(73) Patentinhaber: **Siemens Aktiengesellschaft**
**Wittelsbacherplatz 2**
**D-8000 München 2 (DE)**

(72) Erfinder: **V. Markus, Hugo, Dr.**
**Winner Zeile 25**
**D-8500 Nürnberg (DE)**
Erfinder: **Pohr, Heinz, Dipl.-Ing. (FH)**
**Am Wasserturm 63**
**D-8501 Rosstal (DE)**
Erfinder: **Ziem, Hans-Joachim, Dipl.-Ing. (FH)**
**Karl-Plesch-Strasse 70**
**D-8501 Schwanstetten (DE)**

Courier Press, Leamington Spa, England.

**Beschreibung**

Die Erfindung betrifft einen elektromotorischen Stellantrieb nach dem Oberbegriff des Anspruches 1.

Ein solcher Stellantrieb ist durch die US—A—3 994 179 bekannt. Bei diesem Stellantrieb ist die Spindelmutter von einer gesonderten Hülse umgeben, die über eine Paßfederverbindung in Umfangsrichtung unbeweglich und in axialer Richtung verschieblich mit der Spindelmutter gekuppelt ist. Ihrerseits ist die Hülse wiederum mit einem an ihrem Außenumfang angeordneten Schneckenrad fest verbunden, das über eine Schnecke angetrieben wird, deren Schneckenwelle mit einem Motor gekuppelt ist. Die Hülse ist in zwei axial beabstandeten Lager drehbar, jedoch axial unbeweglich gelagert. Die Spindelmutter ist über eine Zwischenhülse an einem Federpaket abgefedert, dessen Widerlager durch einen Ring gebildet ist, der über eine Spannhülse mit der Hülse verbunden ist. Auf diese Weise werden die von der Spindelmutter beim Auftreffen auf das Federpaket auftretenden Kräfte in die Hülse und über deren Lager in das Gehäuse des Stellantriebes geleitet. Ein solcher Antrieb benötigt eine Vielzahl von einzelnen Bauteilen, so daß ein solcher Stellantrieb einen großen Raumbedarf hat.

Der Erfindung liegt die Aufgabe zugrunde, einen einfacheren und kompakteren Stellantrieb zu schaffen, der als Einheit leicht erstellbar ist und bei hoher Betriebssicherheit eine einfache Inbetriebnahme erlaubt.

Die Lösung der gestellten Aufgabe gelingt durch die Merkmale im Kennzeichen des Anspruches 1.

Durch die DE—B—1 185 031 ist ein Antrieb für Ventile bekannt, bei dem das Schneckenrad eines Schneckengetriebes gleichzeitig als Spindelmutter ausgebildet ist. Das Schneckenrad ist auch bei diesem Antrieb zwischen zwei Lagern axial unbeweglich angeordnet. Somit treten bei diesem Antrieb nicht die mit einem axial beweglich angeordneten Schneckenrad verbundenen Probleme auf.

Weitere vorteilhafte Ausgestaltungen des Stellantriebes nach der Erfindung, die außerdem Maßnahmen zur Sicherstellung der Armaturenspindelstellung bei Demontage der Baueinheit und zur schnellen und einfachen Umschaltung von Motor- auf Handantrieb betreffen, sind Gegenstand von zusätzlichen Ansprüchen.

In der Zeichnung sind einige Ausführungsvarianten dargestellt und nachfolgend näher erläutert. Es zeigt:

FIG. 1 einen Stellantrieb von der Seite im teilweisen Längsschnitt,

FIG. 2 einen Stellantrieb nach FIG. 1 um 90° gedreht mit seitlich angebautem Motor und seitlich angebautem Trennglied in teilweisem Längsschnitt,

FIG. 3 einen Stellantrieb nach FIG. 1 um 90° gedreht mit seitlich angebautem Motor und kopfseitigem Trennglied.

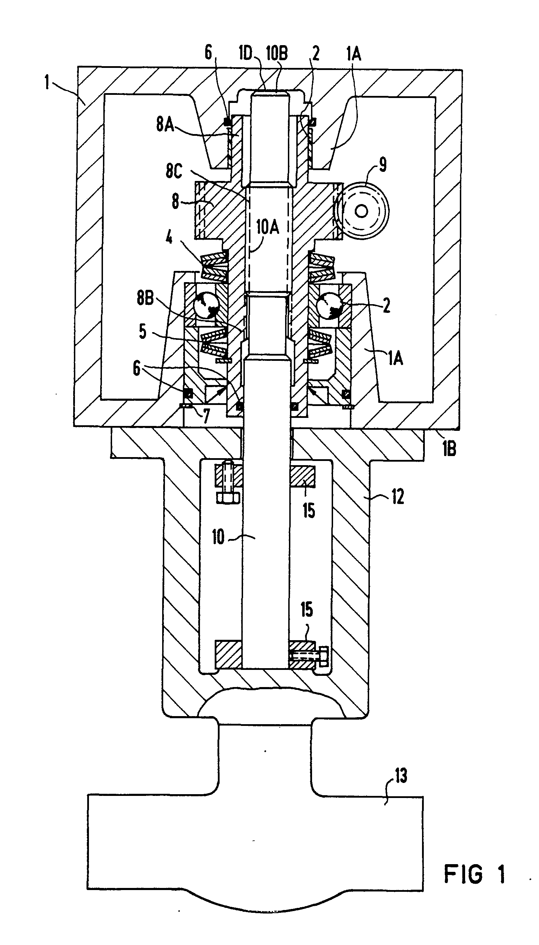

Der Stellantrieb nach FIG. 1 für ein Stellglied 13 (Ventil, Schieber oder dergl.) in einem Rohrsystem besteht aus einem nicht sichtbaren Elektromotor 11 an der hinteren Außenseite eines Tragkörpers 1, einem im Tragkörper 1 angeordneten Schneckengetriebe 8, 9 sowie einer Armaturenspindel 10 des Stellgliedes, die mit dem als Spindelmutter ausgebildeten Schneckenrad 8 des Schneckengetriebes in Verstelleingriff gehalten ist, wozu das Außengewinde 10A der Armaturenspindel 10 in das Innengewinde 8C des Schneckenrades (Spindelmutter) 8 eingreift.

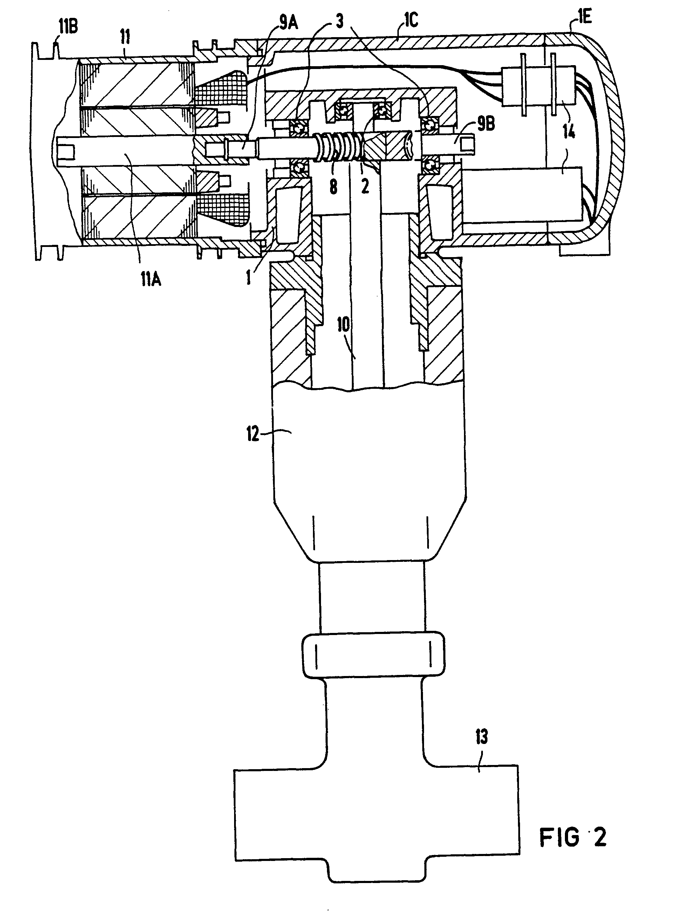

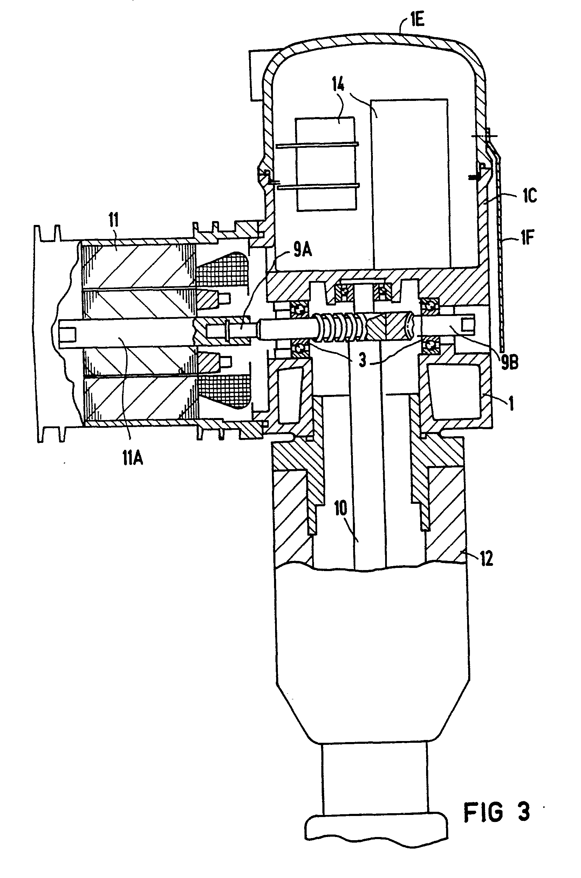

Das als Spindelmutter mitbenutzte Schneckenrad 8 ist mit seinen endseitigen Wellenabschnitten 8A, 8B über Lager 2 axial verschieblich in angeformten Lagerböcken 1A des Tragkörpers 1 drehbar gelagert. Durch Axialfederpakete 4, 5 beiderseits des unteren Lagers 2 kann eine Axialverschiebung des Schneckenrades 8 aus einer Mittellage abgefedert erfolgen. Um auch in außermittiger Lage des Schneckenrades 8 einen einwandfreien Eingriff mit der Schnecke 9 zu sichern, ist die gemäß FIG. 2 und 3 mittels Lager 3 an ihren Schneckenwellenenden 9A, 9B nur drehbeweglich im Tragkörper 1 gelagerte Schnecke 9 als Zylinder- oder Globoidschnecke und das Schneckenrad 8 als Schrägstirnrad ausgeführt. Zur Abdichtung sind Ringdichtungen 6 und zur Fixierung Halteringe 7 in üblicher Weise vorgesehen. Zur Begrenzung der axialen Verschiebung der abgefederten Armaturenspindel 10 in Stellung "Auf" des Stellgliedes 13 ist deren freien, aus dem Schneckenrad 8 ragenden Stirnende 10B ein Anschlag 1D des Tragkörpers 1 zugeordnet, der eine mechanische Überbeanspruchung des Stellgliedes in dieser Endstellung verhindert.

Seitlich am Tragkörper 1 ist der Elektromotor 11 angeflanscht und die Motorwelle 11A A-seitig in Eingriff mit dem Schneckenwellenende 9A gehalten. Das andere Schneckenwellenende 9B ragt aus dem Tragkörper 1 in ein Zwischengehäuse 1C, zur Aufnahme einer Energieversorgungs- und Steuereinrichtung 14 für den Motor 11, das durch ein lösbares Trennglied 1E in Normalbetrieb nach außen abgeschlossen ist. Bei Abnahme des Trenngliedes 1E wird der Motor zwangsläufig stillgesetzt und es kann auf das zugängliche Schneckenwellenende 9B ein Handverstellorgan aufgesetzt werden.

Wie in FIG. 2 angedeutet ist, dann statt des Zwischengehäuses 12C gegebenenfalls auch das B-seitige Motorwellenende unter Umständen zur Handverstellung des Stellantriebs vorgesehen sein. In diesem Fall ist normalerweise das B-seitige Wellenende durch einen als Trennglied ausgebildeten Motordeckel 11B überdeckt und in einem entsprechend ausgestalteten Motorgehäuseraum die besagte Einrichtung 14 angeordnet.

Bei dieser Ausführung nach FIG. 2 wird ein möglichst niedrig bauender Stellantrieb erreicht.

Gemäß FIG. 3 kann bei gleicher seitlicher Anordnung des Motors 11 am Tragkörper 1 das Zwischengehäuse 1C für das Trennglied 1E an der Oberseite des Tragkörpers 1 vorgesehen sein und

3    EP 0 305 762 B1    4

normalerweise das aus dem Tragkörper 1 seitlich herausgeführte Schneckenwellenende 9B durch eine am Trennglied 1E befestigte Abdeckvorrichtung 1F überdeckt sein.

Nach Lösen der Verbindung der Laterne 12 zum Tragkörper 1 am Anschlußflansch 1B kann die aus Tragkörper, Motor und Schneckengetriebe sowie Spindelmutter bestehende Einheit von der Armaturenspindel durch entsprechendes Verdrehen gelöst werden.

Damit in diesem Fall die Stellung des Stellgliedes 13 innerhalb des Leitungssystems nicht verstellt wird, wird an der Armaturenspindel 10 innerhalb der Laterne 12 mindestens eine Klemmvorrichtung 15 vorgesehen, die in Eingriff mit Teilen der Laterne 12 eine axiale Verschiebung der Armaturenspindel 10 unterbindet.

Im Gegensatz zu herkömmlichen Stellantrieben weist der erfindungsgemäße Kompaktantrieb keine drehmoment- oder wegabhängige Abschaltung auf, sondern wird zeitabhängig oder motorstromabhängig abgeschaltet. Die erforderliche Schließkraft am Stellglied wird mit dem innerhalb einer zulässigen Netzspannungsschwankung minimal erbringbaren Anzugs- oder Kippmoment des Motors aufgebracht. Die im Kraftfluß liegenden Bauteile des Antriebs und des Stellgliedes (Armatur) werden für die Überspannung auftretenden maximalen Motormomente ausreichend dimensioniert.

Die Geometrien von Spindelgewinde und Schneckengetriebe werden so aufeinander abgestimmt, daß bei gleichbleibender ausreichender Schmierung die erforderliche Drehmomentreserven entsprechend dem physikalischer Zustand "Lastheben" und "Lastsenken" zum Wiederanfahren aus der Endlage des Stellgliedes verfügbar sind.

### Patentansprüche

1. Elektromotorischer Stellantrieb mit zeitabhängiger Endlage-Abschaltung zum Einsatz in Steuer- oder Regeleinrichtungen für strömende Medien, bei welchem Stellantrieb ein Stellglied über eine mit einer Spindelmutter versehene Armaturenspindel (10) und ein selbsthemmendes Schneckengetriebe (8, 9) mit einem Elektromotor gekoppelt ist, wobei die mit ihrer Schneckenwelle (9A) unmittelbar mit der Welle (11A) des Elektromotors gekuppelte Schnecke (9) des Schneckengetriebes (8, 9) sowie das antriebsmäßig mit der Spindelmutter verbundene Schneckenrad (8) in einem gemeinsamen Tragkörper (1) gelagert sind, der von der Schneckenwelle (9) und von der in der Spindelmutter geführten Armaturenspindel durchdrungen ist, dadurch gekennzeichnet, daß das Schneckenrad (8) selbst als Spindelmutter ausgebildet und axial verschieblich abgefedert im Tragkörper gelagert ist und daß ferner das Schneckenrad (8) zur axialen Verschiebbarkeit gegenüber der nur drehbeweglich im Tragkörper gelagerten Zylinder- oder Globoidschnecke (9) als Schrägstirnrad ausgebildet ist.

2. Stellantrieb nach Anspruch 1, dadurch gekennzeichnet, daß der Armaturenspindel (10) ein Endanschlag (1D) im Tragkörper (1) oder einem mit diesem fest verbundenen Zwischenteil (12) zugeordnet ist.

3. Stellantrieb nach einem der Ansprüche 1 oder 2, dadurch gekennzeichnet, daß der Elektromotor (11) samt Energieversorgungs- und Steuereinrichtung (14) durch ein lösbares Trennglied (1E) von seiner Energiequelle trennbar ist und das Trennglied (1E) im Normalbetrieb eine Handbetätigungsvorrichtung am freien Ende der Motor- oder Schneckenwelle (11A, 9B) nach außen abdeckt.

4. Stellantrieb nach Anspruch 3, dadurch gekennzeichnet, daß der Motor (11) ein B-seitiges freies Wellenende mit Ansatz für eine Handbetätigungsvorrichtung aufweist, das betriebsmäßig vom dem am Motorgehäuse gehaltenen Trennglied (1E) abgedeckt ist.

5. Stellenantrieb nach Anspruch 3, dadurch gekennzeichnet, daß das aus dem Tragkörper (1) herausgeführte zweite Schneckenwellenende (9B) für eine Handbetätigungsvorrichtung betriebsmäßig von dem an einem Zwischengehäuse (1C) lösbar befestigten Trennglied (1E) abgedeckt ist.

6. Stellantrieb nach einem der vorhergehenden Ansprüche, dadurch gekennzeichnet, daß zur Fixierung der axialen Stellung der Armaturenspindel (10) bei mechanischer Trennung des Motors (11) vom Getriebe (8, 9) und bei bestehenbleibender Verbindung der Armaturenspindel (10) mit dem Stellglied (13) mindestens eine Klemmvorrichtung (15) für die Armaturenspindel (10) am Tragkörper (1) oder einem mit diesen verbundenen Zwischenteil (12) vorgesehen ist.

### Revendications

1. Positionneur à moteur électrique s'arrêtant en fin de course en fonction du temps et destiné à être utilisé dans des dispositifs de commande ou de régulation pour des milieux en écoulement, et dans lequel un organe de réglage est accouplé, par l'intermédiaire d'une broche (10) d'un élément de robinetterie, équipée d'un écrou de broche, et d'une transmission à vis sans fin autobloquante (8, 9), à un moteur électrique, le vis sans fin (9) de la transmission à vis sans fin (8, 9), accouplée directement par son arbre (9A) à l'arbre (11A) du moteur électrique, ainsi que la roue tangente (8) reliée selon une liaison motrice à l'écrou de broche, étant supportée dans un support (1), qui est traversé par l'arbre (9) de la vis sans fin et par la broche guidée dans l'écrou de broche, caractérisé par le fait que la roue tangente (8) est agencée elle-même sous la forme d'un écrou de broche et est montée dans le support en étant suspendue de manière à pouvoir être mobile axialement et qu'en outre la roue tangente (8) est conçue sous la forme d'une roue hélicoïdale de manière à être déplaçable axialement par rapport à la vis cylindrique ou globique (9) montée dans le support de manière à avoir seulement un mouvement de rotation.

2. Positionneur suivant la revendication 1,

3

caractérisé par le fait qu'à la broche (10) est associée une butée d'extrémité (1D) située dans le support (1) ou dans une partie intermédiaire (12) reliée rigidement à ce support.

3. Positionneur suivant la revendication 1, caractérisé par le fait que le moteur électrique (11) peut, ainsi que son dispositif d'alimentation en énergie et de commande (14), être séparé de sa source d'énergie par un élément de séparation détachable (1E) et que ce dernier recouvre extérieurement, dans le fonctionnement normal, un dispositif d'actionnement manuel situé sur l'extrémité libre de l'arbre du moteur ou de la vis sans fin (11A, 9B).

4. Positionneur suivant la revendication 3, caractérisé par le fait que le moteur (11) comporte une extrémité d'arbre libre située sur le côté B et comportant un appendice saillant prévu pour un dispositif d'actionnement manuel et masqué pendant le fonctionnement par l'élément de séparation (1A) retenu sur le carter du moteur.

5. Positionneur suivant la revendication 3, caractérisé par le fait que la seconde extrémité (9B) de l'arbre de la vis sans fin, qui ressort du support (1), pour un dispositif d'actionnement manuel est masquée, pendant le fonctionnement, par l'élément de séparation (1E) fixé de façon détachable à un carter intermédiaire (1C).

6. Positionneur suivant l'une des revendications précédentes, caractérisé par le fait que pour la fixation de la position axiale de la broche (10) de l'élément de robinetterie, lorsque le moteur (11) est séparé mécaniquement de la transmission (8, 9) et dans le cas où la liaison entre la broche (10) et l'organe de réglage (13) est maintenue, au moins un dispositif de serrage (15) pour la broche (10) est prévu sur le support (1) ou sur une partie intermédiaire (12) reliée à ce support.

## Claims

1. An electromotor actuator with time-dependent end position disconnection for use in control or regulating devices for flowing agents, in which actuator an adjusting member is coupled with an electromotor by way of a fitting spindle (10) provided with a spindle nut and a self-locking worm drive (8, 9), wherein the worm (9) of the worm drive (8, 9) coupled with its worm shaft (9A) directly to the shaft (11A) of the electromotor, as well as the worm wheel (8), operationally connected to the spindle nut, are mounted in a common carrier body (1), which is penetrated by the worm shaft (9) and by the fitting spindle led in the spindle nut, characterised in that the spindle wheel (8) itself is constructed as spindle nut and mounted axially displaceable in a spring-mounted manner in the carrier body and in that furthermore the worm wheel (8) for axial displacement compared to the cylindrical or enveloping worm (9), mounted only in a rotationally movable manner in the carrier body, is constructed as an inclined front wheel.

2. Actuator according to claim 1, characterised in that the fitting spindle (10) has allocated to it an end stop (1D) in the carrier body (1) or an intermediate part (12) connected firmly with this.

3. An actuator according to claims 1 or 2, characterised in that the electromotor (11) together with the energy supply and the control device (14) is able to be separated by a releasable separating member (1E) from its energy source and the separating member (1E), in normal operation, covers outwards a hand actuating device on the free end of the motor or worm shaft (11A, 9B).

4. An actuator according to claim 3, characterised in that the motor (11) has a B-side free shaft end with an attachment for a hand actuating device, which is covered operationally by the separating member (1E) on the motor housing.

5. An actuator according to claim 3, characterised in that the second worm shaft end (9B) led from the carrier body (1) for a hand actuating device is operationally covered by the separating member (1E) secured in a releasable manner on the intermediate housing (1C).

6. An actuator according to one of the preceding claims, characterised in that for securing the axial position of the fitting spindle (10) with mechanical separation of the motor (11) from the drive (8, 9) and with remaining connection of the fitting spindle (10) to the adjusting member (13) at least one clamping device (15) for the fitting spindle (10) is provided on the carrier body (1) or an intermediate part (12) connected to this.

FIG 1

EP 0 305 762 B1

FIG 2

2

FIG 3